**Europäisches Patentamt**

**European Patent Office**

**Office européen des brevets**

(19)

(11) Veröffentlichungsnummer : **0 439 015 B1**

## (12) EUROPÄISCHE PATENTSCHRIFT

(45) Veröffentlichungstag der Patentschrift :
**20.04.94 Patentblatt 94/16**

(51) Int. Cl.$^5$ : **B65G 27/34,** B65G 43/00,
B23Q 7/18

(21) Anmeldenummer : **91100135.2**

(22) Anmeldetag : **04.01.91**

(54) **Linearfördervorrichtung für Einzelteile.**

(30) Priorität : **18.01.90 AT 98/90**

(43) Veröffentlichungstag der Anmeldung :
**31.07.91 Patentblatt 91/31**

(45) Bekanntmachung des Hinweises auf die
Patenterteilung :
**20.04.94 Patentblatt 94/16**

(84) Benannte Vertragsstaaten :
**AT BE CH DE DK ES FR GB GR IT LI LU NL SE**

(56) Entgegenhaltungen :
**EP-A- 0 349 693**
**WO-A-87/04688**
**AT-B- 341 426**
**DE-A- 3 306 451**

(73) Patentinhaber : **Sticht, Walter**
**Karl-Heinrich-Waggerl-Strasse 8**
**A-4800 Attnang-Puchheim (AT)**

(72) Erfinder : **Sticht, Walter**
**Karl-Heinrich-Waggerl-Strasse 8**
**A-4800 Attnang-Puchheim (AT)**

(74) Vertreter : **Secklehner, Günter, Dr.**
**Rechtsanwalt, Pyhrnstrasse 1**
**A-8940 Liezen (AT)**

EP 0 439 015 B1

## Beschreibung

Die Erfindung betrifft eine Linearfördereinrichtung für Einzelteile mit Vorrichtungen zum Ausrichten und gegebenenfalls Sortieren sowie zum lagerichtigen Führen und gegebenenfalls Speichern, deren Einlaß einem Auslaß einer Fördervorrichtung zum Transport einer Teilmenge von ungeordneten Einzelteilen nachgeordnet ist und deren dem Einlaß gegenüberliegender Endbereich einer Entnahmevorrichtung zugeordnet ist und mit einer aus mehreren, in Förderrichtung der Einzelteile hintereinander angeordneten Funktionsmodulen bestehenden Führungsbahn für die Einzelteile, die jeweils über eine lösbare Kupplungsvorrichtung auf einem Tragkörper befestigt sind, die über einen Antrieb auf einem Basiskörper abgestützt sind.

Eine Vorrichtung zum gerichteten, einzelnen Zuführen von Teilen zu Entnahmestationen ist aus der AT-B-341 426 des gleichen Anmelders bekannt. Dabei ist zwischen einer Aufgabestation und einer Entnahmestation ein Förderweg mit aufeinanderfolgenden, die Teile ausrichtenden Einzelförderern angeordnet. Die Aufgabestation weist einen Auslaß zur dosierten aber ungeordneten Abgabe der in einer Wirrlage befindlichen Teile auf. Die zur Ausrichtung der Einzelteile vorgesehenen Linearförderer sind in etwa horzizontal und hintereinander angeordnet und weisen Abscheider wie z.B. Schikanen, Balancierstäbe, Abweiser oder dgl. auf, um jene Teile auszuschneiden, die einem bestimmten Ausrichtungs- bzw. Vereinzelungszustand nicht entsprechen. Jeder der einzelnen Funktionsmodule bzw. Einzelförderer ist über eine einzelne lösbare Kupplungsvorrichtung mit einem bzw. mehreren elektrischen Vibratoren verbunden. Diese Vibratoren sind über verstellbare Grundplatten auf einer gemeinsamen Tischplatte gehaltert. Somit sind die einzelnen Funktionsmodule voneinander in ihrer Wirkungsweise getrennt und es bedarf jeder der einzelnen Funktionsmodule mit seinem zugeordneten Vibrator bzw. Vibratoren eines eigenen Abstimmungsvorganges.

Bekannte Vibrationsfördereinrichtungen - gemäß DE-PS 25 52 763 - umfassen eine Platte, deren Oberseite ein Profil mit sägezahnartigem Querschnitt, also Längsrinnen aufweist. Durch Abfräsungen dieser Längsrinne in einem vorbestimmten Längsbereich wird ein Balanciersteg gebildet. Teile, die nicht über ihre ganze Länge auf dem stehengebliebenen Teil der Längsrinne aufliegen, fallen seitlich herab. Weiters sind auf der mit einem Vibrationsantrieb in Schwingungen versetzten Platte den Längsrinnen Aufsatzteile zugeordnet, die Abweiser bilden, sodaß nach oben weisende Teile der Montageteile erfaßt werden und diese entweder in die richtige Lage gedrückt oder ausgeworfen werden. Derartige Vibrationsfördereinrichtungen haben sich in der Praxis bewährt, die Herstellung der Platten mit den darauf angeordneten Balancierstegen sowie den Abweisern ist jedoch sehr arbeitsaufwendig und muß äußerst exakt durchgeführt werden, und es ist schwierig, Teile, die nach unten vorragende Enden aufweisen, zuzuführen.

Bei einer weiteren bekannten Vibrationsfördereinrichtung - DE-AS 12 74 981 - weist die Vibrationsfördereinrichtung einen aus Gitterstäben gebildeten Rost auf. Der Rost wird über einen Vibrationsantrieb insgesamt in Schwingungen versetzt, sodaß sich die Teile, die einen Kopfdurchmesser aufweisen, der größer ist als dessen Schaftdurchmesser, mit ihren Köpfen auf den einander benachbarten Gitterstäben aufhängen. Dazu sind die Rostspalten zwischen den einzelnen Gitterstäben größer als der Schaftdurchmesser der Montageteile, jedoch kleiner als deren Kopfdurchmesser. Diese Vibrationsfördereinrichtung ist nur für wenige, ganz spezifisch ausgebildete Teile einsetzbar, da beispielsweise bei einer Änderung des Schaftdurchmessers der zu verarbeitenden Montageteile ein völlig neuer Gitterrost erstellt werden muß.

Aus der GB-PS 963 835 ist eine Vibrationsfördereinrichtung bekannt, die einen Vorratsbehälter und zwei, diesem hintereinander nachgeordnete und parallel zueinander verlaufende Förderbahnteilstücke aufweist. Das dem Vorratsbehälter unmittelbar nachgeordnete Förderbahnteilstück ist mit einem Vibrationsantrieb gekuppelt. In dem nachgeordneten anderen Förderbahnteilstück erfolgt die Förderung nur durch Schwerkraft, wodurch Stauungen nicht vermieden werden können.

Der Erfindung liegt die Aufgabe zugrunde, eine Linearfördereinrichtung für die Förderung von Montageteilen zu schaffen, die mit einfachen Mitteln an die Verarbeitung unterschiedlicher Montageteile angepaßt werden kann und deren Herstellung auch ohne die genaue Kenntnis der zu verarbeitenden Teile möglich ist.

Diese Aufgabe der Erfindung wird bei der Linearfördereinrichtung gemäß Anspruch 1 insbesondere dadurch gelöst, daß dem Auslaß der vorgeordneten Fördereinrichtung ein Funktionsmodul zur Grobausrichtung der Einzelteile diesem ein Funktionsmodul zum Ordnen, Ausrichten und gegebenenfalls Sortieren nachgeordnet ist, an welches ein Funktionsmodul zum Längstransport und gegebenenfalls Speichern der Einzelteile anschließt und daß die Funktionsmodule auf einem für alle gemeinsamen Tragkörper angeordnet sind und jedes der Funktionsmodule unabhängig vom anderen mit dem vibrationsangetriebenen Tragkörper über die lösbare Kupplungsvorrichtung verbunden ist. Die ermöglicht mit geringen Umrüstzeiten das Verarbeiten von unterschiedlich ausgebildeten Montageteilen mit der erfindungsgemäßen Linearfördereinrichtung. Gleichzeitig ist es möglich, die Funktionsmodule zum Grobausrichten, Ordnen, Ausrichten und gegebenenfalls Sortieren in Serien vorzufertigen, was insgesamt eine Herstellung solcher Module zuläßt. Darüber hinaus kann bei derartigen Seriengeräten auch ein hoher technischer Standard erreicht werden, der die Betriebssicherheit solcher

2

Fördereinrichtungen erhöht. Die Anpassung der Linearfördereinrichtung an unterschiedliche Einzelteile kann auf den jeweiligen Bedarf sehr einfach ohne aufwendige Umrüst- und Justierarbeiten vorgenommen werden. Dadurch ist das Abstimmen der Funktionsmodule zueinander, welches für einen stau- und damit störungsfreien Betrieb solcher Fördereinrichtungen maßgeblich ist, und daher auch ein Umrüsten solcher Anlagen auf unterschiedliche Arten von zu fördernden Einzelteilen schnell durchführbar.

Von Vorteil ist es aber auch, wenn die Kupplungsvorrichtungen der Funktionsmodule gleichartig ausgebildet sind, weil durch die Verwendung gleichartiger Kupplungsvorrichtungen an den Funktionsmodulen Fehler und damit Störungen an solchen Anlagen wirkungsvoll verhindert werden können. Dadurch ist eine hohe Verfügbarkeit von solchen Anlagen im allgemeinen in nachgeschalteten, umfangreichen Montagesystemen und geringe Montagekosten erzielbar.

Es ist aber auch möglich, daß die Kupplungsvorrichtungen zwischen den Funktionsmodulen und dem Tragkörper durch in den Tragkörper vorgesehene Längsschlitze und mit den Funktionsmodulen verbundene Gleitsteine gebildet sind, wodurch ein sehr variables Kupplungssystem für den Aufbau der Funktionsmodule auf dem Tragkörper erreicht wird.

Nach einer anderen Ausführungsvariante ist vorgesehen, daß die Kupplungselemente der Kupplungsvorrichtung über Stell- und Justiereinrichtungen mit den Funktionsmodulen und bzw. oder dem Tragkörper verbunden sind. Durch diese Verstellvorrichtungen können die Funktionsmodule automatisch auf diese vorgegebene Werte verstellt werden, was ein rasches Umrüsten solcher Linearfördereinrichtungen ermöglicht.

Nach einer weiteren Ausführungsvariante ist vorgesehen, daß der Basiskörper über eine Schwingungsdämpfungsvorrichtung mit Dämpfungselementen auf einem Maschinengestell befestigt ist, wodurch die Fördereinrichtungen insgesamt sehr geringe Lärmemmissionen verursachen.

Vorgesehen ist aber auch, daß die Höhenführungsbahn für die Einzelteile in den einzelnen Funktionsmodulen unterschiedlich stark in Förderrichtung gegenüber dem Basiskörper geneigt angeordnet sind. Damit ist es möglich, entsprechend der Orientierung der Teile auf der Höhenführungsbahn, z.B. der Dimensionsänderung bei unterschiedlichen Höhen und Längen Rechnung tragend, unterschiedliche Vorschubgeschwindigkeiten für die Teile zu erzielen und so einen einheitlichen Materialfluß über die gesamte Linearfördereinrichtung zu erreichen.

Es ist aber auch vorteilhaft, wenn das Maschinengestell durch ein vertikal ausgerichtetes Profil mit etwa C-förmigem Querschnitt gebildet ist, weil dadurch eine sehr steife Ausbildung des Maschinengestelles, welche den Vibrationsbeeinflussungen einen hohen Widerstand entgegensetzt, erreichbar ist.

Wie es weiters von Vorteil ist, wenn der Basiskörper auf jener Seite des Maschinengestells angeordnet ist, auf welcher die Schenkel des C-förmigen Profils über die Profilbasis vorragen. Dadurch sind die Funktionsteile der Linearfördereinrichtung im Maschinengestell einfach zu lagern, können darüber hinaus für das Justieren dieser Teile sehr gut zugänglich positioniert werden und weiters durch entsprechende Abschottungselemente gegenüber unbefugten Zugriff geschützt und gesichert werden.

Eine andere Ausführungsvariante sieht vor, daß die Fördereinrichtung für die Teilmengen der Einzelteile sowie ein Behälter zur Aufnahme der ungeordneten Menge von Einzelteilen auf der vom Basiskörper abgewendeten Seite der Basis des durch ein C-förmiges Profil gebildeten Maschinengestells angeordnet sind, wodurch diese Fördereinrichtungen insgesamt kompakte Außenabmessungen haben, wodurch sich auch die Gesamtabmessungen von durch mehrere Linearfördervorrichtungen zu bedienende Montageautomaten bzw. Fertigungseinrichtungen klein und damit platzsparend gehalten werden können. Darüber hinaus schafft diese Anordnung eine klare Auftrennung der Baugruppen und der Funktionsteile, was für die Wartung und die Bedienung der Funktionsgruppen von Vorteil ist.

Weiters ist es vorteilhaft, wenn die Fördereinrichtung und der Behälter für die ungeordnete Menge der Teile parallel zur Förderrichtung der Funktionsmodule ausgerichtet und insbesondere entgegen der Förderrichtung anschließend an das Funktionsmodul zur Vororientierung angeordnet ist. Dies ermöglicht ein unmittelbares Zurückführen von nicht richtig geordneten Einzelteilen unmittelbar vor dem Bereich der Vereinzelung in den Behälter für die ungeordnete Menge, wodurch zusätzliche Fördereinrichtungen eingespart werden.

Möglich ist aber auch, wenn in den über die Basis des C-förmigen Profils vorspringenden Schenkeln Führungs- und/oder Antriebsvorrichtungen einer höhenverstellbaren Sicherheitstüre angeordnet sind. Dadurch können die Einrichtungen zum Absichern der Funktionsteile, wie z.B. Sicherheitstüren und bzw. oder Verkleidungselemente einfach angeordnet werden, wodurch weitere Befestigungselemente bzw. Konstruktionsteile erspart werden.

Es ist aber auch vorteilhaft, wenn die Funktionsmodule zwischen der Sicherheitstüre und der Basis des das Maschinengestell bildenden C-förmigen Profils angeordnet ist, weil dadurch das Maschinengestell eine geschlossene Kabinenform darstellt, innerhalb der die Funktionsmodule geschützt sind und Beeinflussungen der Umgebung, insbesondere Lärmbeeinflussungen wirkungsvoll vermieden werden.

Nach einer weiteren Ausführungsvariante ist vorgesehen, daß das Funktionsmodul zum Ordnen und Ausrichten der Einzelteile über einen Rückförderweg mit einem Sammelbehälter für die ausgeschiedenen Einzelteile versehen ist. Dadurch wird es möglich, die Linearfördereinrichtung mit dem Behälter für die ungeordneten Einzelteile räumlichen Anordnungsgegebenheiten anzupassen.

Es ist aber auch möglich, daß der Sammelbehälter durch den Wechselbehälter für die ungeordnete Menge der Teile gebildet ist, wodurch ein zusätzlicher Aufnahmebehälter und eine auch damit verbundene manuelle Teilemanipulation bei der Umrüstung solcher Linearfördereinrichtungen entfällt.

Wie es weiters nach einer vorteilhaften Ausführungsvariante möglich ist, daß die Rückfördervorrichtung durch einen Schwenkförderer gebildet ist, der eine zur Förderrichtung der Funktionsmodule unterschiedliche Förderrichtung aufweist, wodurch es beispielsweise möglich ist, die am Funktionsmodul für das Ordnen ausgeschiedenen Teile zu prüfen und mit dem Schwenkförderer entsprechend dem Ergebnis der Prüfung in unterschiedliche Aufnahmebehälter rückzuführen, um so eventuell festgestellte Schlechtteile auszusondern.

Nach einer weiteren Ausführungsvariante ist vorgesehen, daß im Bereich des das Maschinengestell bildende C-förmigen Profiles Versorgungseinrichtungen, insbesondere für die Versorgung mit Druckluft und bzw. oder elektrischer Energie unter- und bzw. oberhalb des Basiskörpers des Linearförderers angeordnet sind. Durch diese Anordnung werden sehr kurze Versorgungsleitungen zu den Funktionsmodulen erreicht, was sich vorteilhaft für die Montage aber auch für die Betriebssicherheit dieser Linearfördereinrichtungen auswirkt.

Wie es weiters möglich ist, daß im Bereich des C-förmigen Profiles oberhalb der Funktionsmodule Einrichtungen der elektrischen und bzw. oder pneumatischen Steuerung der Linearfördervorrichtung angeordnet sind, weil dadurch eine optische Funktionsüberwachung der Linearfördereinrichtung durch Anordnung von Anzeigeinstrumenten und bzw. oder Anzeigeleuchten in für das Überwachen geeigneter Position möglich ist.

Weiters ist es vorteilhaft, wenn die Stell- und Justiereinrichtungen für die Funktionsmodule aus mit einem unter Druck stehenden Medium beaufschlagten Zylindern und bzw. oder elektrisch betriebenen Antrieben gebildet sind. Dadurch kann ein Umrüsten der Fördereinrichtung für unterschiedliche Einzelteile sehr rasch und ohne Einsatz von Spezialisten zumindest für zwei Einstellungen, welche die Zylinder gegen Endanschläge anfahren, erfolgen.

Wie es weiters auch möglich ist, daß die Stell- und Justiereinrichtungen für die Funktionsmodule durch z.B. elektrisch über Schrittmotore betätigte Spindel-antriebe gebildet sind, wodurch sich eine Vielzahl von unterschiedlichen Stellungen ansteuern läßt und dadurch eine wesentlich höhere Variantenzahl von Einzelteilen mit der Linearfördereinrichtung bei geringstmöglichen Umrüstzeiten gefördert werden kann.

Nach einer weiteren Ausbildungsvariante ist vorgesehen, daß die Funktionsmodule aus Höhen- und Seitenführungsbahnen gebildet sind und eine Relativverstelleinrichtung für die Höhen- und Seitenführungsbahnen vorgesehen ist. Dadurch ist es neben der Abstimmung der Funktionsmodule zueinander weiters möglich, die Führungsbahnen der Teilegeometrie optimal anzupassen.

Wie es weiters auch möglich ist, daß der Seiten- und bzw. oder Höhen- und bzw. oder Relativverstellvorrichtung eine Positioniersteuerung zugeordnet ist und Meß- und Positionsmeldeeinrichtungen vorgesehen sind, wodurch die Umstellung bzw. das Umrüsten nach den jeweiligen Einzelteilen zugeordneten Stellparametern vorgenommen und kontrolliert werden kann.

Weiters ist es vorteilhaft, wenn die elektrischen Steuereinrichtungen aus einem Funktionsteil für die Steuerung und einem Funktionsteil für ein Diagnosesystem gebildet sind. Durch die Trennung der Steuerfunktionen von den Überwachungsfunktionen können sehr einfach gegenseitige Beeinflussungen durch Rückkoppelungen und Überlagerungen und damit Fehlfunktionen im Steuerungsablauf wie im Überwachungssystem vermieden werden.

Nach einer Ausführungsvariante ist vorgesehen, daß der Funktionsteil für die Steuerung eine z.B. frei programmierbare Steuerung umfaßt, wodurch sich verfahrensbedingte Änderungen im Steuerungsablauf sehr rasch durchführen lassen.

Es ist aber auch möglich, daß der Funktionsteil für das Diagnosesystem ein Anzeigeelement, z.B. einen Bildschirm und bzw. oder ein Aufzeichnungsgerät, z.B. Streifendrucker, Diskettenstation etc. umfaßt, wodurch eine visuelle Überwachung der Anlage wie auch eine lückenlose Dokumentation der Verfahrensabläufe gegeben ist.

Möglich ist aber auch, daß das Diagnosesystem über eine Fehlerhäufigkeitslogik verfügt, wodurch eine Unterscheidung von anlagebedingten und teilebedingten Unregelmäßigkeiten im Verfahren möglich ist, um eine Klassifizierung der Fehler vorzunehmen.

Möglich ist es aber auch, daß die Fehlerhäufigkeitslogik nach Art und Anzahl auftretender Fehler Aufzeichnungs- und bzw. oder Schaltfunktionen auslöst, wodurch ein Fehlertoleranzbereich entsprechend den Anforderungen festgelegt und insgesamt die Verfügbarkeit einer solchen Anlage erhöht werden kann.

Von Vorteil ist aber auch, wenn das Diagnosesystem ein Meßsystem für die Einzelteile, insbesondere für das berührungslose Messen umfaßt, weil dadurch der Teilefluß für die Vornahme von Vermessungsfunktionen nicht unterbrochen werden muß und so die Gesamtkapazität der Förderleistung nicht beeinträchtigt wird.

Zum besseren Verständnis der Erfindung wird diese anhand der in den Zeichnungen dargestellten Ausführungsbeispiele näher erläutert.

Es zeigen:

Fig. 1    eine erfindungsgemäß ausgebildete Linearfördereinrichtung in Seitenansicht;

Fig. 2    die Linearfördereinrichtung in Seitenansicht, teilweise geschnitten, gemäß den Linien II-II in Fig.1;

Fig. 3    die Linearfördereinrichtung nach Fig.1 in Draufsicht, geschnitten, gemäß den Linien III-III in Fig. 1;

Fig. 4    eine andere Ausführungsvariante der Funktionsmodule einer erfindungsgemäß ausgebildeten Linearfördervorrichtung in Seitenansicht;

Fig. 5    die Funktionsmodule gemäß Fig.4 in Draufsicht;

Fig. 6    ein Funktionsmodul in Stirnansicht, geschnitten, gemäß den Linien VI-VI in Fig.5;

Fig. 7    ein Funktionsmodul in Stirnansicht, geschnitten, gemäß den Linien VII-VII in Fig.5;

Fig. 8    ein Funktionsmodul einer erfindungsgemäß ausgebildeten Linearfördereinrichtung in Stirnansicht, gemäß Pfeil VIII in Fig.5:

Fig. 9    eine andere Ausführungsvariante einer Linearfördereinrichtung in Seitenansicht, teilweise geschnitten;

Fig. 10    die Ausführungsvariante nach Fig.9 in Draufsicht;

Fig. 11    die Funktionsmodule einer erfindungsgemäß ausgebildeten Linearfördervorrichtung in vereinfachter schematischer, schaubildlicher Darstellung;

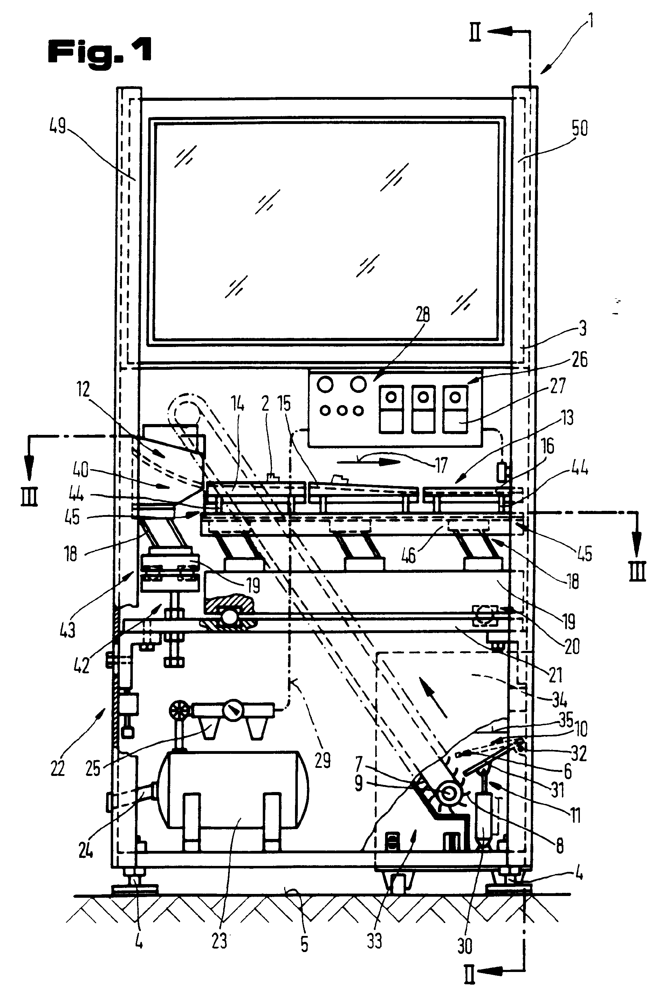

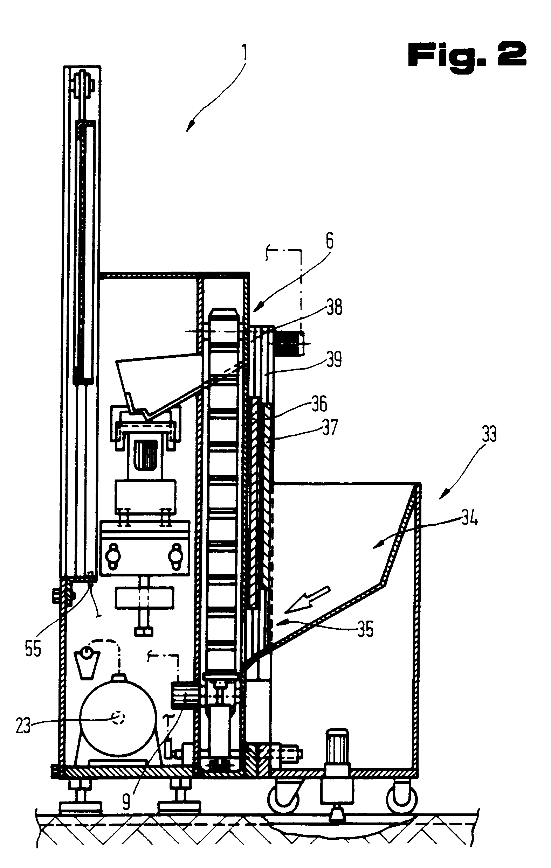

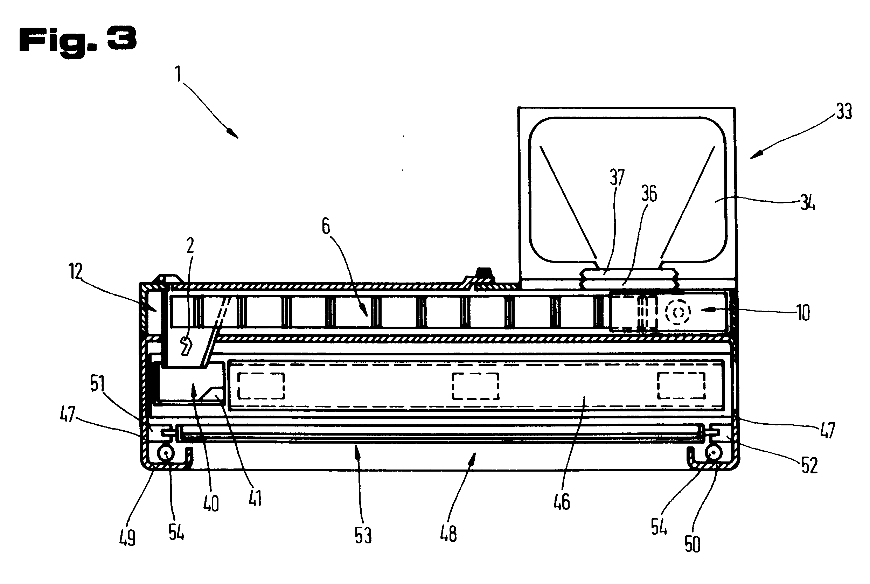

In den Fig.1 bis 3 ist eine Vorrichtung 1 zum Ausrichten und bzw. oder Sortieren und gegebenenfalls Vereinzeln von Einzelteilen 2 gezeigt. Diese Vorrichtung 1 besteht aus einem Maschinengestell 3, welches über der Höhe nach einstellbare Stützfüße 4 auf einer Aufstandsfläche 5, beispielsweise einem Boden einer Werkhalle abgestützt ist. Auf dem Maschinengestell 3 ist eine Fördereinrichtung 6 gelagert, die ein umlaufendes Förderband 7 mit auf diesem angeordneten Mitnehmern 8 aufweist. Die Fördereinrichtung 6 ist im vorliegenden Fall in Art eines Elevatorförderers ausgebildet.

Das Förderband 7 wird über einen Antriebsmotor 9, in der durch einen Pfeil angedeuteten Richtung umlaufend angetrieben und erstreckt sich von einer Aufnahmeschurre 10, in der eine Zuführvorrichtung 11 angeordnet ist, in den Bereich einer Umlenkschurre 12. Dieser Umlenkschurre 12 ist eine Linearfördervorrichtung 13 nachgeordnet. Die Linearfördervorrichtung 13 besteht aus einzelnen Förderstrecken 14,15,16, in welchen unter Verwendung von bekannten Bauteilen, wie Balancierstegen und bzw. oder Abweisern und bzw. oder Kalibern eine Ausrichtung bzw. Sortierung der Einzelteile 2 auf ihren Transport in Richtung eines Pfeiles 17 erfolgt. Der Transport der Einzelteile 2 in den Förderstrecken 14 bis 16 bzw. im Bereich der Umlenkschurre 12 erfolgt mittels Vibrationsantrieben 18, die auf einem Basiskörper 19 befestigt sind, der über Schwingungsdämpfungsvorrichtungen 20, auf einer am Maschinengestell 3 befestigten Grundplatte 21 angeordnet ist. Über eine Einstellvorrichtung 22 kann die Grundplatte 21 auf unterschiedliche Stellungen gegenüber der Aufstandsfläche 5 - z.B. parallel oder in der dem Pfeil 17 entsprechenden Förderrichtung geneigt - ausgerichtet werden.

Auf dem Maschinengestell 3 ist weiters zur Druckluftversorgung und Steuerung der einzelnen Antriebe bzw. Zylinder ein Zwischenspeicher 23 angeordnet, der über eine Leitung 24 mit einem zentralen Druckluftversorgungssystem verbunden ist. Mit dem Zwischenspeicher 23 ist über Leitungen eine Wartungseinheit 25 und eine Pneumatiksteuerung 26 verbunden sowie Ventile 27, Bedienungs-und Anzeigeorgane 28. Die Pneumatiksteuerung 26 ist über schematisch, durch strichpunktierte Linien angedeutete Leitungen 29 mit der Wartungseinheit 25 und einem Hubantrieb 30 für die Zuführvorrichtung 11, die aus einer einen Schurrenboden 31 bzw. die diese bildende Platte ist an ihrem vom Förderband 7 distanzierten Ende um eine Achse 32 schwenkbar am Maschinengestell 3 befestigt und kann mit dem Hubantrieb 30, der in einem von der Achse 32 distanzierten Bereich näher dem Förderband 7 angeordnet ist, aus einer in vollen Linien gezeichneten Ruhestellung in eine in strichlierten Linien schematisch angedeutete, angehobene Stellung verstellt werden. Durch die Bewegung der Platte soll der Nachschub der Einzelteile 2 in Richtung des Förderbandes 7 ermöglicht werden.

Auf der von der Linearfördervorrichtung 13 abgewendeten Seite der Fördereinrichtung 6 ist ein der Aufnahmeschurre 10 vorgeordneter, als Wechselbehälter 33 angeordneter Speicher 34 angeordnet, der über einen Auslaß 35 mit der Aufnahmeschurre 10 verbunden werden kann.

Üblicherweise sind im Bereich des Auslasses 35, sowohl im Wechselbehälter 33, wie auch in der Vorrichtung 1 Schieber 36,37 in Höhenführungsbahnen 38,39 verschiebbar angeordnet, um die Zufuhr von Einzelteilen 2 in die Aufnahmeschurre 10 zu regeln bzw. zu verhindern.

In der der Fördereinrichtung 6 nachgeordneten Umlenkschurre 12 werden die durch die Mitnehmer 8 des Förderbandes 7 geförderten Einzelteile 2 in ihrer Förderrichtung um in etwa 90 Grad umgelenkt und durch Schwerkraftförderung durch die als Rutsche ausgebildete Umlenkschurre 12 einem Vibrationsförderer 40 zugeführt, wobei die Förderrichtung der Einzelteile 2 um weitere 90 Grad in Richtung des Speichers 34 umgelenkt und beim Transport durch im Vibrationsförderer 40 angeordnete Schikanenelemente 41 grob ausgerichtet und der Förderstrecke 14,15,16 zugeführt werden. Der Vibrationsförderer 40 ist auf der Grundplatte 21 über eine Höhenstelleinrichtung 42 der Höhe nach einstellbar gelagert. Ein Schwingungsdämpfungssystem 43, z.B. ein Rollenlagerbett verhindert eine Schwingungsübertragung in das Maschinengestell 3. Die Förderstrecken 14,15,16 sind über Kupplungsvorrichtungen 44 und Stell- und Justiereinrichtungen 45 auf einem gemeinsamen Tragkörper 46 bewegungsverbunden gehaltert und über die Vibrationsantriebe 18 längs der Förderrichtung - Pfeil 17 -relativ beweglich zum Basiskörper 19 angeordnet. Die Vibrationsantriebe 18 können als Wurfförderer oder mit einer horizontalen Schwingungsbewegung als Gleitförderer ausgebildet sein.

Das durch ein C-Profil 47 gebildete Maschinengestell 3 bildet beidseits einer Bedienöffnung 48 Ecksteher 49,50 für die Anordnung von Höhenführungsbahnen 51,52 für eine Sicherheitstüre 53 aus, die über eine bekannte Anordnung von Gegengewichten 54 gewichtsentlastend ist und deren Stellung über Türkontakte 55 überwacht und gegebenenfalls angezeigt wird.

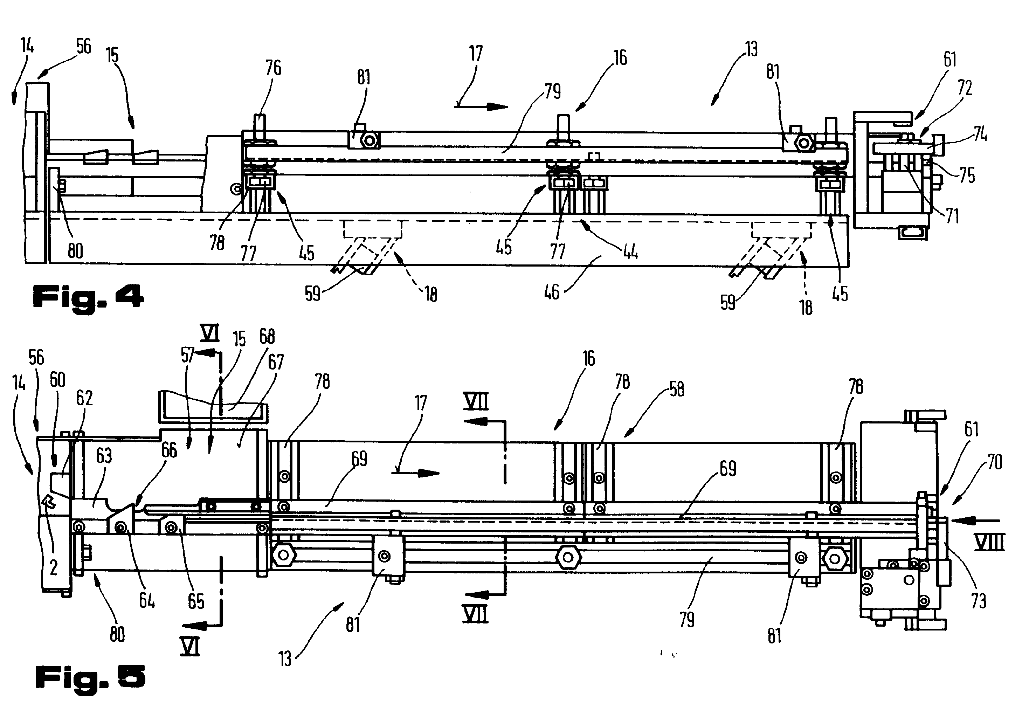

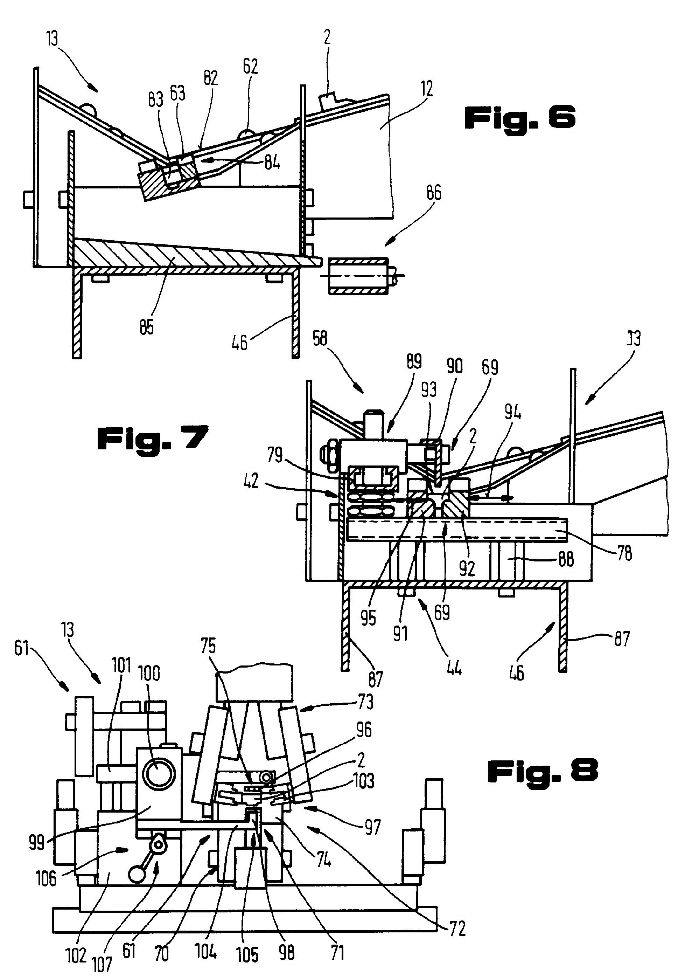

In den Fig.4 und 5 ist die Linearfördervorrichtung 13 der Vorrichtung 1 gezeigt. Sie umfaßt drei Bereiche von Förderstrecken 14,15,16, die ein Funktionsmodul 56 für das Vororientieren von Einzelteilen 2, ein Funktionsmodul 57 für das Ordnen und Ausrichten der Einzelteile 2 und ein Funktionsmodul 58 für das Fördern und Speichern der Einzelteile 2 bilden. Die Funktionsmodule 56 bis 58 sind auf dem gemeinsamen Tragkörper 46 über Stell- und Justiereinrichtungen 45 angeordnet. Der Tragkörper 46 bildet mit den Vibrationsantrieben 18, die z.B. als Schwingungserzeuger einen Elektromagneten 59 aufweisen, den an sich bekannten Vibrationsförderer 40 für die Förderung der Einzelteile 2 in Richtung des Pfeiles 17 von einer Aufgabestelle 60 zu einer Entnahmestelle 61.

Das Funktionsmodul 56, in welches die Einzelteile 2 über die als Schwerkraftrutsche ausgebildete Umlenkschurre 12 gelangen, weist in Förderrichtung - Pfeil 17 - Umlenkblöcke 62 auf, durch die die Einzelteile 2 durch die auf sie einwirkende Förderkraft in eine vororientierte Lage gebracht werden.

Im Funktionsmodul 57 werden die Einzelteile 2 durch die auf einer Führungsbahn 63 angeordneten Abweiser 64,65, welche in die Förderbahn der Einzelteile 2 ragen, in eine bestimmte Lage ausgerichtet und geordnet. Dabei werden nicht entsprechend vororientierte Einzelteile 2 aus der Führungsbahn 63 im Bereich von Ausnehmungen 66 aus der Führungsbahn 63 geworfen. Diese Einzelteile 2 werden über eine Ausschleusstrecke 67, einem Sammelbehälter 68 und bzw. oder über einen Rückförderer, z.B. einem Förderband, dem Speicher 34 zugeführt. Damit ist gewährleistet, daß die Einzelteile 2 der weiteren Führungsbahn 69 des Funktionsmoduls 58 in ausgerichteter und definierter Lage zugeführt werden. Die Führungsbahnen 63,69 sind in Förderrichtung - Pfeil 17 - fallend geneigt angeordnet, wodurch die Wirkung des Vibrationsförderers 40 erhöht wird. Dadurch kann die Leistungsfähigkeit des Vibrationsförderers 40 an den Entnahmetakt für die Einzelteile 2 angepaßt werden. Durch die Stell- und Justiereinrichtung 45, die in der gezeigten Ausführungsform durch Stellschrauben gebildet ist, ist eine Umrüstung des Vibrationsförderers 40 für unterschiedliche Kapazitäten rasch möglich.

In der Führungsbahn 69 werden die Einzelteile 2 dicht aneinandergereiht, einer im Bereich der Entnahmestelle 61 angeordneten Vereinzelungsvorrichtung 70, z.B. einem pneumatisch betätigten Stoppanschlag 71 zugeführt, die die Einzelteile 2 im Entnahmetakt vereinzelt und an einer Abnahmeposition 72, z.B. für einen Zangengreifer 73 auf einen Führungsbahnabschnitt 74 bereitstellt. Mit einem Sensor 75, z.B. einer Staudruckabfragevorrichtung kann an der Abnahmeposition 72 überwacht werden, ob ein Einzelteil 2 vorhanden ist oder.

In den beschriebenen Fig.4 und 5 sind der besseren Verständlichkeit wegen, die Stell- und Justiereinrichtungen 45 als Stellschrauben 76 gezeigt, wobei die Kupplungsvorrichtungen 44 durch Schraubköpfe 77 gebildet sind, die, ähnlich Gleitsteinen, in einem nach oben offenen und in einem Winkel von 90 Grad zur Förderrichtung - Pfeil 17 - angeordneten, C-förmigen Profil 78 geführt sind. Parallel zur Förderrichtung - Pfeil 17 - ist ein weiteres nach oben offenes C-förmiges Profil 79 auf den Stellschrauben 76 gelagert, auf dem Halter 80,81 für die Führungsbahnen 63,69 angeordnet sind.

Durch die Abstützung der Führungsbahnen 63,69 auf den Stell- und Justiereinrichtungen 45 der beschriebenen Art ist eine räumliche Einstellmöglichkeit der Führungsbahnen 63,69 möglich.

Wie anhand nachfolgender Ausführungsbeispiele dargestellt, können zum schnelleren Umrüsten einer solchen Linearfördervorrichtung 13, die Stell- und Justiereinrichtungen 45, anders als in den Fig.4 und 5 gezeigt, durch Stellelemente ersetzt werden, die einen automatisierten Stellvorgang ermöglichen, wie z.B. druckmittelbeaufschlagte Zylinder und bzw. oder elektrisch betriebene Gewindespindeln bzw. in der Funktion ähnlich wirkende Stellelemente.

Es wird dadurch nicht nur ein schnelleres Umrüsten der Vorrichtung 1 ermöglicht, sondern auch eine höhere Universalität erreicht, wodurch in verstärktem Ausmaß für solche Vorrichtungen 1 einheitlich gebaute Funktionsmodule herangezogen werden können, die in höheren Stückzahlen produziert eine hohe Wirtschaftlichkeit und eine höhere Funktionssicherheit ergeben.

In den Fig.6 und 7 sind zwei Querschnittsbereiche der Linearfördervorrichtung 13 gezeigt, wobei für gleiche, bereits in den Fig.1 bis 5 beschriebene Teile, gleiche Bezugszeichen verwendet werden.

In der Fig.6 ist die Führungsbahn 63 im Anschluß an die Vororientierstrecke gezeigt. Die Einzelteile 2 werden durch die Schwerkraft in der als Rutsche ausgebildeten Umlenkschurre 12 in Richtung der Führungsbahn 63 bewegt. Durch die Vibration, welche eine Bewegung der Einzelteile 2 in Richtung der Förderrichtung - Pfeil 17 - bewirkt, werden die Einzelteile 2 um in etwa 90 Grad umgelenkt, wobei die in einer Gleitbahn 82 angeordneten Umlenkblöcke 62 die Vororientierung der Einzelteile 2 ermöglichen. Die Einzelteile 2 gelangen in eine Aufnahme 83 der Führungsbahn 63. Eine Einlauföffnung 84 der Führungsbahn 63 ist über einer am Tragkörper 46 angeordneten, keilförmigen, in Richtung der Umlenkschurre 12 geneigten Abführbahn 85 angeordnet. Die Einzelteile 2, die nicht lagerichtig zur Führungsbahn 63 gelangen und daher von der Einlauföffnung 84 nicht aufgenommen werden, stürzen auf die Abführbahn 85 und werden durch die Neigung und die Vibrationsbewegung an ein parallel in Richtung der Förderrichtung an der Abführbahn 85 vorbeigeführtes Förderband 86 abgegeben und z.B. wieder dem Speicher 34 zugeführt, um dort erneut in den Förderkreislauf zu gelangen.

In der Fig.7 ist ein Schnitt im Bereich des Funktionsmoduls 58 mit der Führungsbahn 69 für Einzelteile 2 der Linearfördervorrichtung 13 dargestellt. Am mit seinen Schenkeln 87 nach unten weisenden, C-förmigen Profil des Tragkörpers 46 ist über eine Kupplungsvorrichtung 44, die z.B. aus Kugelrastelementen 88 gebildet ist, das Profil 78, z.B. ein C-förmiges Profil im rechten Winkel zur Förderrichtung angeordnet. In zur Förderrichtung paralleler Richtung ist das Profil 79 über die Höhenstelleinrichtung 42 am Profil 78 abgestützt, auf welchem ein Halteelement 89 für eine im Bereich der Führungsbahn 69 angeordnete, eine Höhenbegrenzung für die Einzelteile 2 bildende Abweiseschiene 90 befestigt ist.

Im gezeigten Beispiel ist die Führungsbahn 69 aus Bahnteilen 91,92 gebildet, die einen Freiraum 93 für die Einzelteile 2 umgrenzen. Durch Verstellung der Bahnteile 91,92 in Richtung der Doppelpfeile 94,95 ist es möglich, den Freiraum 93 in seiner Breite quer zur Förderrichtung den Einzelteilen 2 anzupassen. Durch Verstellung der Höhenstelleinrichtung 42 ist es darüberhinaus möglich, den Freiraum 93 für die Einzelteile 2 der Höhe nach zu verändern. Durch diese Verstellmöglichkeit des Freiraumes 93 kann die Linearfördervorrichtung 13 rasch an unterschiedliche Abmessungen der Einzelteile 2 angepaßt werden. Insbesondere wenn für die Höhenstelleinrichtung 42 und bzw. oder das Halteelement 89 und bzw. oder die Kupplungsvorrichtung 44 mechanisch, elektrisch oder pneumatisch betätigbare Stellelemente, wie z.B. Zylinder, Magnete, Spindelmotore etc. angeordnet werden.

In der Fig.8 ist die Entnahmestelle 61 der Linearfördervorrichtung 13 mit dem Führungsbahnabschnitt für die Einzelteile 2 gezeigt. Die Einzelteile 2 werden in einer der Geometrie der Einzelteile 2 angepaßten Ausnehmung an der Abnahmeposition 72 durch den Stoppanschlag 71 positioniert, wobei der Sensor 75, z.B. eine Luftdüse 96 einer Staudrucküberwachungseinrichtung 97 das Vorhandensein eines Einzelteiles 2 überwacht. Der Abnahmeposition 72 in Förderrichtung - Pfeil 17 - vorgeordnet, ist die Vereinzelungsvorrichtung 70 angeordnet, wodurch die Einzelteile 2 bereits vereinzelt in die Abnahmeposition 72 gelangen, von wo sie z.B. durch den Zangengreifer 73 entnommen und einer Bearbeitungsposition bzw. Montagestelle zugeführt werden.

Die Vereinzelung der Einzelteile 2 kann auch im Bereich der Abnahmeposition 72 erfolgen. Ein abgewinkeltes Hebeelement 98, welches über einen Spannklotz 99 und eine Führungsstange 100 auf einer Zylinderkopfplatte 101 eines Druckluftzylinders 102, z.B. einem Kurzhubzylinder angeordnet ist, hebt dabei den Einzelteil 2 aus dem Führungsbereich der Führungsbahnabschnitte 74 in den Bereich der Greiferbacken 103. Gleichzeitig bildet das Hebeelement 98 mit seinem Befestigungsschenkel 104 einen Anschlag 105 für die durch die Linearfördervorrichtung 13 zugeführten weiteren Einzelteile 2. Wird der Einzelteil 2 vom Zangengreifer 73 übernommen und das Hebeelement 98 wieder in seine ursprüngliche Lage zurückgeführt, kann ein weiterer Einzelteil 2 auf das Hebeelement 98 auflaufen. Dadurch wird das taktweise Entnehmen der Einzelteile 2 für das Bearbeiten und bzw. oder Montieren der Einzelteile 2 gewährleistet.

Durch die Verwendung des Spannklotzes 99 und der Führungsstange 100 kann das Hebeelement 98 an veränderte Abnahmepositionen für die Einzelteile 2 angepaßt werden. Darüber hinaus ist es im Rahmen der Erfindung ebenso möglich, die Führungsstange 100 teleskopartig auszubilden und über eine Antriebsvorrichtung, z.B. einen druckbeaufschlagten Zylinder oder einen Spindelmotor, die Anpassung des Hebeelementes 98 an variable Abnahmepositionen 72 automatisiert vorzunehmen. Weiters ist es auch möglich, das Hebeelement 98 über eine Kupplungsvorrichtung 106, z.B. einen Exzenterhebel 107 mit dem Spannklotz 99 zu kuppeln, um dadurch unterschiedlich ausgebildete Hebeelemente 98 bei kürzestmöglichen Umrüstzeiten einsetzen zu können.

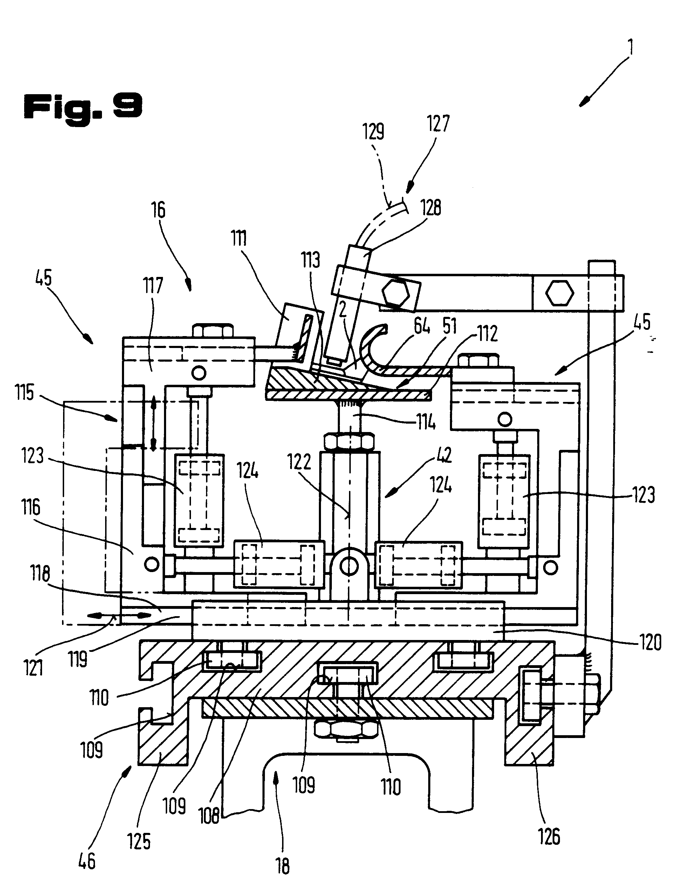

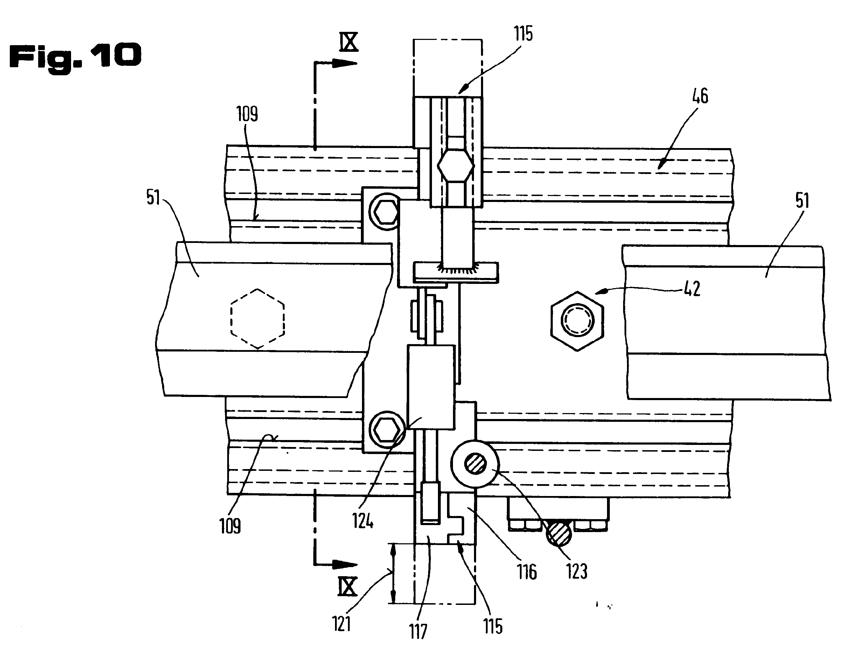

In den Fig.9 und 10 ist ein Querschnittsbereich der Förderstrecke 16 mit dem Führungsbahnabschnitt 74 für die Speicherung der Einzelteile 2 gezeigt. Der Tragkörper 46, der auf Vibrationsantrieben 18, z.B. Schwingmagneten angeordnet ist, weist einen C-förmigen Querschnitt auf. Im Steg 108 sind in Längsrichtung des Tragkörpers 46 verlaufende T-förmige Nuten 109 für Gleitsteine 110 angeordnet, die zur Befestigung des Tragkörpers 46 auf den Vibrationsantrieben 18 und der Stell- und Justiereinrichtungen 45 für die Höhenführungsbahn 51, sowie einen Abweiser 64 und einem Leitblech 111 dienen. Die Höhenführungsbahn 51 ist z.B. aus einem in Längsrichtung der Förderstrecke 16 verlaufenden Blechstreifen 112 und einem auf diesem angeordneten Auflaufkeil 113 gebildet und über die Höhenstelleinrichtung 42, z.B. eine Stellschraube 114 am Tragkörper 46 höheneinstellbar abgestützt. Die Stell- und Justiereinrichtungen 45 für den Abweiser 64 und das Leitblech 111 sind aus in Führungsanordnungen 115 in ihrer relativen Lage zueinander verstellbaren, L-förmigen Winkelteilen 116,117 gebildet. Ein Basisschenkel 118 ist in einer Führungsanordnung 119 gegenüber einem am Tragkörper 46 im rechten Winkel zur Vorschubvorrichtung der Förderstrecke angeordneten Stützteil 120 in Richtung eines Doppelpfeiles 121 verschieblich geführt. Durch die Führungsanordnungen 115,119 ist es nun möglich, das Leitblech 111 bzw. den Abweiser 64 in Bezug auf die Höhenführungsbahn 51 und in Bezug auf eine Symmetrieachse 122 zu positionieren. Wie insbesondere der Fig.9 zu entnehmen ist, ist die Stell- und Justiereinrichtung 45 mit Betätigungsorganen 123,124, z.B. druckbeaufschlagte Zylinder versehen, die ein automatisches Verstellen der Stell- und Justiereinrichtung 45 zwischen zwei Endlagen, wie es durch die Darstellung in vollen und in strich-zweipunktierten Linien gezeigt ist, ermöglichen. Anstelle der Zylinder für die Betätigungsorgane 123,124 können auch Stellglieder, wie Schrittmotore mit Spindeltrieben verwendet werden, um damit jede beliebige Position zwischen den beiden Endlagen anfahren zu können. Dadurch ist ein rasches Umrüsten der Vorrichtung 1 für die Verarbeitung von unterschiedlichen Einzelteilen 2 möglich. Durch die in Längsrichtung des Tragkörpers 46 in Schenkeln 125,126 angeordneten Nuten 109 können Überwachungselemente 127, z.B. Induktivfühler 128, die über Leitungen 129 mit einer Steuereinrichtung verbunden sind, über einstellbare Halteelemente angeordnet werden.

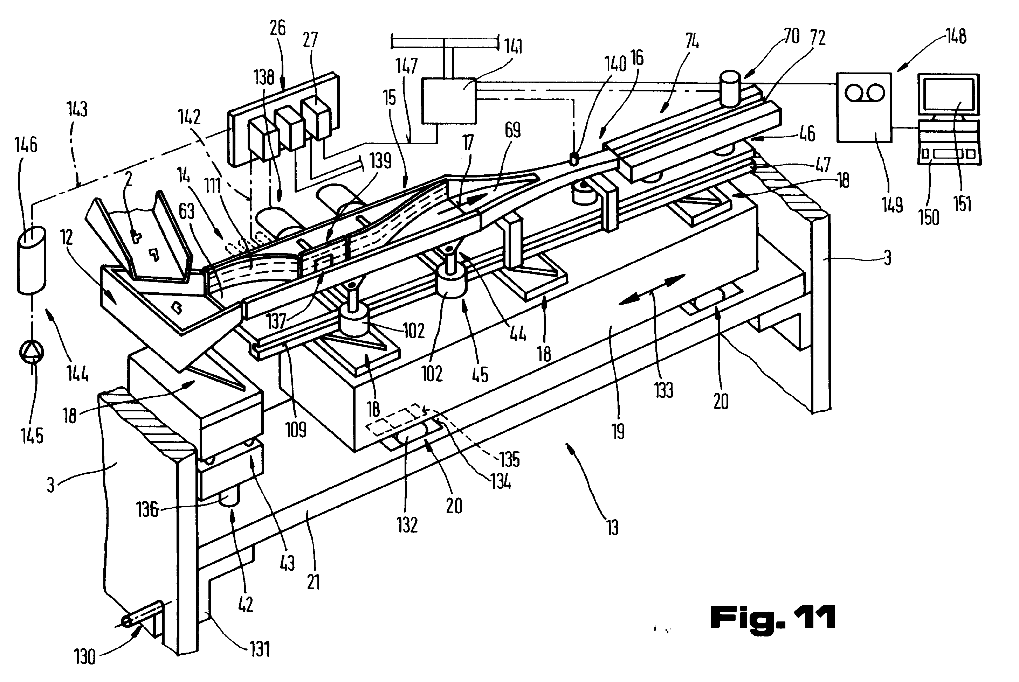

In Fig. 11 ist in schematischer Darstellung die Linearfördervorrichtung 13 gezeigt. An Stegen des Maschinengestells 3 sind in einer Langlochanordnung 130 in vertikaler Richtung verstellbare Montagewinkel 131 mit ihren Schenkeln zueinander angeordnet. Die Schenkel der Montagewinkel 131 bilden Auflagen für die Grundplatte 21. Über die Schwingungsdämpfungsvorrichtung 20, z.B.über Rollenkörper 132 in einem Rollenlagerbett, ist der Basiskörper 19 mit seiner hohen Eigenmasse in Richtung eines Doppelpfeiles 133 parallel zur Förderrichtung beweglich gelagert abgestützt. Die Größe der pendelartigen Bewegungen des Basiskörpers 19 ist einerseits durch den Durchmesser der Rollenkörper 132 und den diesen zugeordneten Ausnehmungen 134,135 in der Grundplatte 21 und dem Basiskörper 19 begrenzt und beträgt in etwa zwischen 2 und 6, bevorzugt 4 mm. Auf dem Basiskörper 19 ist der Vibrationsantrieb 18 gebildet, z.B. durch einen Elektromagneten für die Umlenkschurre 12 angeordnet. Das Schwingungsdämpfungssystem 43 für die Umlenkschurre 12 ist über die höhenstelleinrichtung 42, z.B. eine Gewindespindel 136 der Höhe nach justierbar angeordnet. Am Basiskörper 19 sind die Vibrationsantriebe 18 für den Tragkörper 46 gebildet, z.B. durch das C-Profil 47 für die Stell- und Justiereinrichtungen 45 und den Kupplungsvorrichtungen 44 für die Förderstrecken 14,15,16 angeordnet.

Wie schon in der Beschreibung zu den Fig.9 und 10 ausführlich erläutert wurde, sind die Stell- und Justiereinrichtungen 45 z.B. durch druckluftbeaufschlagbare Druckluftzylinder 102 gebildet, die über Steuerungsbefehle, zwei Endlagenpositionen einnehmen können und damit eine rasche Anpassung der Linearfördervorrichtung 13 an unterschiedliche Einsatzbedingungen für verschiedene Einzelteile 2 ermöglichen. Selbstverständlich können anstelle der Druckluftzylinder 102 auch stufenlos verfahrbare Stellelemente, wie z.B. über Schrittmotore betriebene Spindeltriebe eingesetzt werden, um damit die Linearfördervorrichtung 13 besser an die unterschiedlichen Einsatzbedingungen anpassen zu können. In der Darstellung der Fig.11 bildet die Förderstrecke 14 die Groborientierstrecke für die Einzelteile 2. Dazu sind im Bereich der Führungsbahn 63 Leitbleche 111 angeordnet, um die Einzelteile 2 im Bereich der Groborientierstrecke durch die Vibrationsantriebe 18 hervorgerufenen Eigenbewegung die Einzelteile 2 in einer vorgegebenen Lage zu positionieren.

Durch die Ausnehmung 137, welche dem Leitblech 111 zugeordnet ist, werden unorientierte Einzelteile 2 aus dem Förderweg absortiert und gelangen von dort z.B. über das Förderband 86 zurück zum Speicher. Über ein Stellelement 138 kann z.B. die Position des Leitbleches 111 variiert werden, um die Linearfördervorrichtung 13 an unterschiedliche Einzelteile 2 anzupassen. In der Fig.11 ist das Orientieren der Einzelteile 2 vereinfacht durch das Leitblech 111 dargestellt, wie es für das Orientieren sehr einfacher Einzelteile 2 ausreicht. In der Praxis sind diese Leitbleche 111 für schwierig geformte Einzelteile 2 durch entsprechende Schikanenelemente 139 ersetzt.

Wie strichliert eingezeichnet, können solche Schikanenelemente aus räumlich verformbaren Blech- oder Kunststofflamellen hergestellt sein, wobei jeder Lamelle ein eigener Antrieb ähnlich einem Nadeldrucker zugeordnet ist, wodurch eine große Flexibilität durch kurze Umrüstzeiten erreicht wird.

In der Führungsbahn 69 der Förderstrecke 16 werden die aus der Förderstrecke 15 ankommenden, orientierten Einzelteile 2 geordnet und aneinandergereiht und das Vorhandensein der Einzelteile 2 über einen Sensor 140 überwacht. Damit ist sichergestellt, daß die Einzelteile 2 lagerichtig und im ununterbrochenen Fluß der Förderstrecke 16 mit dem als Zwangsführung ausgebildeten Führungsbahnabschnitt 74 zugeführt werden und daß nach deren Vereinzelung in der Vereinzelungsvorrichtung 70 jeweils ein Einzelteil 2 in der Abnahmeposition 72 bereitgestellt wird. Mit einem dem Sensor 140 vorgeordneten Sensor ist es weiters möglich, die Anzahl der im geordneten Zustand aufgestauten Einzelteile 2 zu überwachen und die Linearfördervorrichtung 13 über eine Steuerung 141 vorübergehend bei gefülltem Speicherbereich stillzusetzen. Damit wird ein unnötiges Bewegen der Einzelteile 2 in der Linearfördervorrichtung 13 und dadurch eine Beschädigung heikler Einzelteile, wie es z.B. bei Elektronikbauteilen der Fall ist, vermieden. In der Fig.11 ist weiters die Pneumatiksteuerung 26 mit den Ventilen 27 für das Betätigen der druckbeaufschlagten Elemente, wie z.B. der Druckluftzylinder 102 dargestellt, wozu diese über Druckluftleitungen 142 mit der Pneumatiksteuerung 26 und diese über Druckluftleitungen 143 mit einem Druckversorgungssystem 144, gebildet durch einen Kompressor 145 und einem Druckspeicher 146, verbunden sind.

Die Ventile 27 sind über Steuerleitungen 147 mit der Steuerung 141, z.B. einer freiprogrammierbaren Steuerung verbunden. Es ist aber weiters ebenso möglich, den Steuerorganen eine Rechnereinheit 148 vorzuordnen, die aus einem Zentralrechner 149 und einem Eingabeterminal 150 mit einem Bildschirm 151 gebildet ist.

Eine solche Konfiguration wird insbesondere beim Parallelbetrieb mehrerer gleichartiger Linearfördervorrichtungen 13 für das Zusammenführen einer größeren Anzahl von unterschiedlichen Einzelteilen 2 zu einer zentralen Bearbeitungs- und bzw. oder Montagestation zweckmäßig sein, weil dadurch die zentrale Ansteuerung und Überwachung aller Linearfördervorrichtungen 13 in Abhängigkeit von der Bearbeitungs- und bzw. oder Montagestation möglich ist.

Selbstverständlich ist es im Rahmen der Erfindung möglich, den erfindungsgemäßen Linearfördervorrichtungen beliebige Zuführeinrichtungen für die Montageteile vor- oder nachzuordnen, wie z.B. Wirbelkammern, Trommelzuführgeräte, Entwirrgeräte etc. Darüber hinaus kann die Anordnung der einzelnen Orientier-, Sortier-, Vereinzelungsvorrichtungen und Abweiser, Schikanen und Auswurföffnungen oder dgl. beliebig auf den Führungsbahnen des vibrierenden Basiskörpers erfolgen.

Die in der vorstehenden Beschreibung, der Zeichnungen und den Ansprüchen offenbarten Merkmale der Erfindung können sowohl einzeln als auch in beliebiger Kombination jeweils eigenständige erfindungsgemäße Lösungen bilden.

# Bezugszeichenaufstellung

| | |
|---|---|
| 1 Vorrichtung | 41 Schikanenelement |
| 2 Einzelteil | 42 Höhenstelleinrichtung |
| 3 Maschinengestell | 43 Schwingungsdämpfungssystem |
| 4 Stützfuß | 44 Kupplungsvorrichtung |
| 5 Aufstandsfläche | 45 Stell- und Justiereinrichtung |
| | |
| 6 Fördereinrichtung | 46 Tragkörper |
| 7 Förderband | 47 C-Profil |
| 8 Mitnehmer | 48 Bedienöffnung |
| 9 Antriebsmotor | 49 Ecksteher |
| 10 Aufnahmeschurre | 50 Ecksteher |
| | |
| 11 Zuführvorrichtung | 51 Höhenführungsbahn |
| 12 Umlenkschurre | 52 Höhenführungsbahn |
| 13 Linearfördervorrichtung | 53 Sicherheitstüre |
| 14 Förderstrecke | 54 Gegengewicht |
| 15 Förderstrecke | 55 Türkontakt |
| | |
| 16 Förderstrecke | 56 Funktionsmodul |
| 17 Pfeil | 57 Funktionsmodul |
| 18 Vibrationsantrieb | 58 Funktionsmodul |
| 19 Basiskörper | 59 Elektromagnet |
| 20 Schwingungsdämpfungsvorrichtung | 60 Aufgabestelle |
| | |
| 21 Grundplatte | 61 Entnahmestelle |
| 22 Einstellvorrichtung | 62 Umlenkblock |
| 23 Zwischenspeicher | 63 Führungsbahn |
| 24 Leitung | 64 Abweiser |
| 25 Wartungseinheit | 65 Abweiser |
| | |
| 26 Pneumatiksteuerung | 66 Ausnehmung |
| 27 Ventil | 67 Ausschleusstrecke |
| 28 Bedien- und Anzeigeorgan | 68 Sammelbehälter |
| 29 Leitung | 69 Führungsbahn |
| 30 Hubantrieb | 70 Vereinzelungsvorrichtung |
| | |
| 31 Schurrenboden | 71 Stoppanschlag |
| 32 Achse | 72 Abnahmeposition |
| 33 Wechselbehälter | 73 Zangengreifer |
| 34 Speicher | 74 Führungsbahnabschnitt |
| 35 Auslaß | 75 Sensor |
| | |
| 36 Schieber | 76 Stellschraube |
| 37 Schieber | 77 Schraubkopf |
| 38 Höhenführungsbahn | 78 Profil |
| 39 Höhenführungsbahn | 79 Profil |
| 40 Vibrationsförderer | 80 Halter |

EP 0 439 015 B1

81 Halter
82 Gleitbahn
83 Aufnahme
84 Einlauföffnung
85 Abführbahn

86 Förderband
87 Schenkel
88 Kugelrastelement
89 Halteelement
90 Abweiseschiene

91 Bahnteil
92 Bahnteil
93 Freiraum
94 Doppelpfeil
95 Doppelpfeil

96 Luftdüse
97 Staudrucküberwachungseinrichtung
98 Hebeelement
99 Spannklotz
100 Führungsstange

101 Zylinderkopfplatte
102 Druckluftzylinder
103 Greiferbacken
104 Befestigungsschenkel
105 Anschlag

106 Kupplungsvorrichtung
107 Exzenterhebel
108 Steg
109 Nut
110 Gleitstein

111 Leitblech
112 Blechstreifen
113 Auflaufkeil
114 Stellschraube
115 Führungsanordnung

116 Winkelteil
117 Winkelteil
118 Basisschenkel
119 Führungsanordnung
120 Stützteil

121 Doppelpfeil
122 Symmetrieachse
123 Betätigungsorgan
124 Betätigungsorgan
125 Schenkel

126 Schenkel
127 Überwachungselement
128 Induktivfühler
129 Leitung
130 Langlochanordnung

131 Montagewinkel
132 Rollenkörper
133 Doppelpfeil
134 Ausnehmung
135 Ausnehmung

136 Gewindespindel
137 Ausnehmung
138 Stellelement
139 Schikanenelement
140 Sensor

141 Steuerung
142 Druckluftleitung
143 Druckluftleitung
144 Druckversorgungssystem
145 Kompressor

146 Druckspeicher
147 Steuerleitung
148 Rechnereinheit
149 Zentralrechner
150 Eingabeterminal

151 Bildschirm

## Patentansprüche

1. Linearfördereinrichtung für Einzelteile (2) mit Vorrichtungen zum Ausrichten und gegebenenfalls Sortieren sowie zum lagerichtigen Führen und gegebenenfalls Speichern, deren Einlaß einem Auslaß einer Fördervorrichtung zum Transport einer Teilmenge von ungeordneten Einzelteilen (2) nachgeordnet ist und deren dem Einlaß gegenüberliegender Endbereich einer Entnahmevorrichtung zugeordnet ist und mit einer aus mehreren, in Förderrichtung der Einzelteile (2) hintereinander angeordneten Funktionsmodulen

11

(56,57,58) bestehenden Führungsbahn (63,69) für die Einzelteile (2), wobei dem Auslaß der vorgeordneten Fördereinrichtung (6) ein Funktionsmodul (56) zur Grobausrichtung der Einzelteile (2) diesem ein Funktionsmodul (57) zum Ordnen, Ausrichten und gegebenenfalls Sortieren nachgeordnet ist, an welches ein Funktionsmodul (58) zum Längstransport und gegebenenfalls Speichern der Einzelteile (2) anschließt und wobei die Funktionsmodule (56,57,58) auf einem für alle gemeinsamen Tragkörper (46) jeweils über eine lösbare Kupplungsvorrichtung (44,106) auf dem Tragkörper (46) befestigt sind, der über einen Vibrationsantriebs auf einem Basiskörper (19) abgestützt ist,.

2. Linearfördereinrichtung für Einzelteile nach Anspruch 1, dadurch gekennzeichnet, daß die Kupplungsvorrichtungen (44,106) der Funktionsmodule (56,57,58) gleichartig ausgebildet sind.

3. Linearfördereinrichtung für Einzelteile nach Anspruch 1 oder 2, dadurch gekennzeichnet, daß die Kupplungsvorrichtungen (44,106) zwischen den Funktionsmodulen (56,57,58) und dem Tragkörper (46) durch in den Tragkörper (46) vorgesehene Längsschlitze und mit den Funktionsmodulen (56,57,58) verbundene Gleitsteine (110) gebildet sind.

4. Linearfördereinrichtung für Einzelteile nach einem oder mehreren der Ansprüche 1 bis 3, dadurch gekennzeichnet, daß die Kupplungselemente der Kupplungsvorrichtung (44,106) über Stell- und bzw. oder Justiereinrichtungen (45) mit den Funktionsmodulen (56,57,58) und bzw. oder dem Tragkörper (46) verbunden sind.

5. Linearfördereinrichtung für Einzelteile nach einem oder mehreren der Ansprüche 1 bis 4, dadurch gekennzeichnet, daß der Basiskörper (19) über eine Schwingungsdämpfungsvorrichtung (20) mit Dämpfungselementen auf einem Maschinengestell (3) befestigt ist.

6. Linearfördereinrichtung für Einzelteile nach einem oder mehreren der Ansprüche 1 bis 5, dadurch gekennzeichnet, daß die Höhenführungsbahn (38,39) für die Einzelteile (2) in den einzelnen Funktionsmodulen (56,57,58) unterschiedlich stark in Förderrichtung gegenüber dem Basiskörper (19) geneigt angeordnet sind.

7. Linearfördereinrichtung für Einzelteile nach einem oder mehreren der Ansprüche 1 bis 6, dadurch gekennzeichnet, daß das Maschinengestell (3) durch ein vertikal ausgerichtetes Profil mit etwa C-förmigen Querschnitt gebildet ist.

8. Linearfördereinrichtung für Einzelteile nach einem oder mehreren der Ansprüche 1 bis 7, dadurch gekennzeichnet, daß der Basiskörper (19) auf jener Seite des Maschinengestells (3) angeordnet ist, auf welcher die Schenkel des C-förmigen Profils über die Profilbasis vorragen.

9. Linearfördereinrichtung für Einzelteile nach einem oder mehreren der Ansprüche 1 bis 8, dadurch gekennzeichnet, daß die Fördereinrichtung (6) für die Teilmengen der Einzelteile (2) sowie ein Behälter zur Aufnahme der ungeordneten Menge von Einzelteilen (2) auf der von dem Basiskörper (19) abgewendeten Seite der Basis des durch ein C-förmiges Profil gebildeten Maschinengestells (3) angeordnet sind.

10. Linearfördereinrichtung für Einzelteile nach einem oder mehreren der Ansprüche 1 bis 9, dadurch gekennzeichnet, daß die Fördereinrichtung (6) und der Behälter für die ungeordnete Menge der Teile parallel zur Förderrichtung der Funktionsmodule (56,57,58) ausgerichtet und insbesondere entgegen der Förderrichtung anschließend an das Funktionsmodul (56) zur Vororientierung angeordnet ist.

11. Linearfördereinrichtung für Einzelteile nach einem oder mehreren der Ansprüche 1 bis 10, dadurch gekennzeichnet, daß in den über die Basis des C-förmigen Profils vorspringenden Schenkeln Führungs- und/oder Antriebsvorrichtungen einer höhenverstellbaren Sicherheitstüre (53) angeordnet sind.

12. Linearfördereinrichtung für Einzelteile nach einem oder mehreren der Ansprüche 1 bis 11, dadurch gekennzeichnet, daß die Funktionsmodule (56,57,58) zwischen der Sicherheitstüre (53) und der Basis des das Maschinengestell bildenden C-förmigen Profils angeordnet ist.

13. Linearfördereinrichtung für Einzelteile nach einem oder mehreren der Ansprüche 1 bis 12, dadurch gekennzeichnet, daß das Funktionsmodul (57) zum Ordnen und Ausrichten der Einzelteile (2) über einen Rückförderweg mit einem Sammelbehälter (68) für die ausgeschiedenen Einzelteile (2) versehen ist.

**14.** Linearfördereinrichtung für Einzelteile nach einem oder mehreren der Ansprüche 1 bis 13, dadurch gekennzeichnet, daß der Sammelbehälter (68) durch den Wechselbehälter (33) für die ungeordnete Menge der Teile gebildet ist.

**15.** Linearfördereinrichtung für Einzelteile nach einem oder mehreren der Ansprüche 1 bis 14, dadurch gekennzeichnet, daß die Rückfördervorrichtung durch einen Schwenkförderer gebildet ist, der eine zur Förderrichtung der Funktionsmodule (56,57,58) unterschiedliche Förderrichtung aufweist.

**16.** Linearfördereinrichtung für Einzelteile nach einem oder mehreren der Ansprüche 1 bis 15, dadurch gekennzeichnet, daß im Bereich des das Maschinengestell (3) bildende C-förmigen Profiles Versorgungseinrichtungen, insbesondere für die Versorgung mit Druckluft und bzw. oder elektrischer Energie unter- und bzw. oberhalb des Basiskörpers (19) des Linearförderers angeornet sind.

**17.** Linearfördereinrichtung für Einzelteile nach einem oder mehreren der Ansprüche 1 bis 16, dadurch gekennzeichnet, daß im Bereich des C-förmigen Profiles oberhalb der Funktionsmodule (56,57,58) Einrichtungen der elektrischen und bzw. oder pneumatischen Steuerung der Linearfördervorrichtung (13) angeordnet sind.

**18.** Linearfördereinrichtung für Einzelteile nach einem oder mehreren der Ansprüche 1 bis 17, dadurch gekennzeichnet, daß die Stell- und bzw. oder Justiereinrichtungen (45) für die Funktionsmodule (56,57,58) aus mit einem unter Druck stehenden Medium beaufschlagten Zylindern und bzw. oder elektrisch betriebenen Antrieben gebildet sind.

**19.** Linearfördereinrichtung für Einzelteile nach einem oder mehreren der Ansprüche 1 bis 18, dadurch gekennzeichnet, daß die Stell- und Justiereinrichtungen (45) für die Funktionsmodule (56,57,58) durch z.B. elektrisch über Schrittmotore betätigte Spindelantriebe gebildet sind.

**20.** Linearfördereinrichtung für Einzelteile nach einem oder mehreren der Ansprüche 1 bis 19, dadurch gekennzeichnet, daß die Funtionsmodule (56,57,58) aus Höhen- und Seitenführungsbahnen gebildet sind und eine Relativverstelleinrichtung für die Höhen- und Seitenführungsbahnen vorgesehen ist.

**21.** Linearfördereinrichtung für Einzelteile nach einem oder mehreren der Ansprüche 1 bis 20, dadurch gekennzeichnet, daß der Seiten- und bzw. oder Höhen- und bzw. oder Relativverstellvorrichtung eine Positioniersteuerung zugeordnet ist und Meß- und Positionsmeldeeinrichtungen vorgesehen sind.

**22.** Linearfördereinrichtung für Einzelteile nach einem oder mehreren der Ansprüche 1 bis 21, dadurch gekennzeichnet, daß die elektrischen Steuereinrichtungen aus einem Funktionsteil für die Steuerung (141) und einem Funktionsteil für ein Diagnosesystem gebildet sind.

**23.** Linearfördereinrichtung für Einzelteile nach einem oder mehreren der Ansprüche 1 bis 22, dadurch gekennzeichnet, daß der Funktionsteil für die Steuerung (141) eine z.B. frei programmierbare Steuerung umfaßt.

**24.** Linearfördereinrichtung für Einzelteile nach einem oder mehreren der Ansprüche 1 bis 23, dadurch gekennzeichnet, daß der Funktionsteil für das Diagnosesystem ein Anzeigeelement, z.B. einen Bildschirm (151) und bzw. oder ein Aufzeichnungsgerät, z.B. Streifendrucker, Diskettenstation etc. umfaßt.

**25.** Linearfördereinrichtung für Einzelteile nach einem oder mehreren der Ansprüche 1 bis 24, dadurch gekennzeichnet, daß das Diagnosesystem über eine Fehlerhäufigkeitslogik verfügt.

**26.** Linearfördereinrichtung für Einzelteile nach einem oder mehreren der Ansprüche 1 bis 25, dadurch gekennzeichnet, daß die Fehlerhäufigkeitslogik nach Art und Anzahl auftretender Fehler Aufzeichnungs- und bzw. oder Schaltfunktionen auslöst.

**27.** Linearfördereinrichtung für Einzelteile nach einem oder mehreren der Ansprüche 1 bis 26, dadurch gekennzeichnet, daß das Diagnosesystem ein Meßsystem für die Einzelteile (2), insbesondere für das berührungslose Messen umfaßt.

## Claims

1.  Linear conveyer for individual parts (2) with devices for orienting and if applicable, for sorting and guiding in proper position, and if required, for storage, the inlet of which is arranged downstream of an outlet of a conveyor transporting a portion of individual parts (2) in disarray and the end region of which opposite the inlet is associated with a take-up device, and with a guide track (63, 69) for the individual parts (2) consisting of several function modules (56, 57, 58) arranged behind each other in the conveying direction of the individual parts (2), whereby a function module (56) for coarse orientation of the individual parts (2) is arranged downstream of the conveyor (6) and a function module (57) arranged subsequently for ordering, orientation and if required, sorting, which is followed by a function module (58) for transportation and if applicable, storage of the individual parts (2), and whereby each of the function modules (56, 57, 58) is fastened by means of a detachable coupling device (44, 106) to the mutual supporting body (46), which by means of a vibratory drive is mounted on a base element (19).

2.  Linear conveyer for individual parts according to claim 1, characterized in that the coupling devices (44, 106) of the fucntion modules (56, 57, 58) are formed alike.

3.  Linear conveyer for individual parts according to claim 1 or 2, characterized in that the coupling devices (44, 106) between the function modules (56, 57, 58) and the supporting body (46) are formed by longitudinal slots in the supporting body (46) and crossheads (110) which are connected with the function modules (56, 57, 58).

4.  Linear conveyer for individual parts according to one or more of claims 1 to 3, characterized in that the coupling elements of the coupling device (44, 106) are connected with the function modules (56, 57, 58) and/or the supporting body (46) by setting and/or adjusting devices (45).

5.  Linear conveyer for individual parts according to one or more of claims 1 to 4, characterized in that the base element (19) is attached to a machine frame (3) by means of a vibration damping device (20) with damping elements.

6.  Linear conveyer for individual parts according to one or more of claims 1 to 5, characterized in that the guide track (38, 39) for the individual parts (2) in the individual function modules (56, 57, 58) is more or less inclined to the base element (19) in the conveying direction.

7.  Linear conveyer for individual parts according to one or more of claims 1 to 6, characterized in that the machine frame (3) is formed by a vertically oriented profile with an approximately C-shaped cross-section.

8.  Linear conveyer for individual parts according to one or more of claims 1 to 7, characterized in that the base element (19) is arranged on that side of the machine frame (3) form which the shanks of the C-shaped profile protude beyond the profile base.

9.  Linear conveyer for individual parts according to one or more of claims 1 to 8, characterized in that the conveyer (6) for a series of the individual parts (2) and also a box for the reception of all the individual parts (2) in disarray, is arranged on the side of the base of the machine frame (3) which is formed as a C-shaped profile, facing away from the base element (19).

10. Linear conveyer for individual parts according to one or more of claims 1 to 9, characterized in that the conveyer (6) and the box for the portion of the parts in disarray, is in parallel alignment with the conveying direction of the function modules (56, 57, 58) and in particular, next to the function module (56) for pre-orientation arranged against the conveying direction.

11. Linear conveyer for individual parts according to one or more of claims 1 to 10, characterized in that in the shanks projecting beyond the base of the C-shaped profile guiding and/or driving devices are arranged for a height-adjustable safety gate (53).

12. Linear conveyer for individual parts according to one or more of claims 1 to 11, characterized in that the function modules (56, 57, 58) are arranged between the safety gate (53) and the base forming the C-shaped profile of the machine frame.

13. Linear conveyer for individual parts according to one or more of claims 1 to 12, characterized in that the function module (57) for sorting and orienting of the individual parts (2) is provided by means of a return path with a collecting box (68) for the removed individual parts (2).

14. Linear conveyer for individual parts according to one or more of claims 1 to 13, characterized in that the collecting box (68) is an interchangeable box (33) for the portion of parts in disarray.

15. Linear conveyer for individual parts according to one or more of claims 1 to 14, characterized in that the return conveying device consists of a vibratory conveyor which has a different conveying direction than the conveying direction of the function modules (56, 57, 58).

16. Linear conveyer for individual parts according to one or more of claims 1 to 15, characterized in that supply systems are arranged in the region of the C-shaped profile forming the machine frame (3), in particular for the supply of compressed air and/or electric energy below and/or above the base element (19) of the linear conveyer.

17. Linear conveyer for individual parts according to one or more of claims 1 to 16, characterized in that in the region of the C-shaped profile above the function modules (56, 57, 58) electric and/or pneumatic control systems are arranged for the linear conveyer (13).

18. Linear conveyer for individual parts according to one or more of claims 1 to 17, characterized in that the setting and/or adjusting devices (45) for the function modules (56, 57, 58) consist of cylinders being put under pressure by a medium and/or electrically operating drive mechanisms.

19. Linear conveyer for individual parts according to one or more of claims 1 to 18, characterized in that the setting and/or adjusting devices (45) for the function modules (56, 57, 58) are formed by spindle drives which are electrically operated by step motors.

20. Linear conveyer for individual parts according to one or more of claims 1 to 19, characterized in that the function modules (56, 57, 58) consist of vertically and laterally guiding tracks and are provided with a relative-adjusting device for the vertically and laterally guiding tracks.

21. Linear conveyer for individual parts according to one or more of claims 1 to 20, characterized in that the lateral and/or vertical and/or relative adjusting device is associated with a positioning control system and that provision is made for measuring and positioning indicators.

22. Linear conveyer for individual parts according to one or more of claims 1 to 21, characterized in that the electric control systems consists of a function means for the control system (141) and a function means for a diagnostic system.

23. Linear conveyer for individual parts according to one or more of claims 1 to 22, characterized in that the function means for the control system (141) comprises a freely programmable control system, for example.

24. Linear conveyer for individual parts according to one or more of claims 1 to 23, characterized in that the function means for the diagnostic system comprises an indicating element, for example a screen (151) and/or a recording apparatus, such as a tape printer, diskette station, etc.

25. Linear conveyer for individual parts according to one or more of claims 1 to 24, characterized in that the diagostic system includes an error rate logic.

26. Linear conveyer for individual parts according to one or more of claims 1 to 25, characterized in that the error rate logic releases according to the kind and amount of errors recording functions and/or switching functions.

27. Linear conveyer for individual parts according to one or more of claims 1 to 26, characterized in that the diagnostic system comprises a measuring system for individual parts (2), in particular for contactless measuring.

**Revendications**

1. Installation de transport linéaire pour pièces détachées(2) avec des dispositifs d'orientation, et le cas échéant, de triage et de guidage en position correcte et le cas échéant de stockage, dont l'entrée est disposée en aval d'une sortie d'un dispositif de trans- port pour le transport d'une quantité partielle de pièces détachées (2) désordonnées et dont la partie extrême à l'opposé de l'entrée est associée à un dispositif de prélèvement et à une voie de guidage (63, 69) pour les pièces détachées (2) constituée par plusieurs modules de fonction (56, 57, 58) agencés les uns derrière les autres dans la direction de transport des pièces détachées (2), de façon qu'en aval de la sortie du dispositif de transport(6) soit disposé un module de fonction (56) pour l'orientation grossière des pièces détachées (2) et qu'en aval de celui-ci soit disposé un module de fonction (57) pour la mise en ordre, l'orientation, et le cas échéant, pour le triage, en aval duquel est raccordé un module de fonction (58) pour le transport dans la direction longitudinale et, le cas échéant, le stockage des pièces détachées (2), et dans laquelle les modules de fonction (56, 57, 58) sont fixés respectivement par l'intermédiaire d'un dispositif d'accouplement (44, 106) détachable sur un organe de support (46) commun à tous qui est monté sur un élément de base (19) par l'intermédiaire d'une commande vibratoire.

2. Installation de transport linéaire pour pièces détachées selon la revendication 1, caractérisée en ce que les dispositifs d'accouplement (44, 106) des modules de fonction (56, 57, 58) sont réalisés d'une manière identique.

3. Installation de transport linéaire pour pièces détachées selon la revendication 1 ou 2, caractérisée en ce que les dispositifs d'accouplement (44, 106) situés entre les modules de fonction (56, 57, 58) et l'organe de support (46) sont constitués par des fentes longitudinales prévues dans l'organe de support (46) et des têtes coulissantes (110) reliées aux modules de fonction (56, 57, 58).

4. Installation de transport linéaire pour pièces détachées selon une ou plusieurs des revendications 1 à 3, caractérisée en ce que les éléments d'accouplement du dispositif d'accouplement (44, 106) sont reliés par l'intermédiaire de dispositifs de réglage et/ou d'ajustage (45) aux modules de fonction (56, 57, 58) et/ou à l'organe de support (46).

5. Installation de transport linéaire pour pièces détachées selon une ou plusieurs des revendications 1 à 4, caractérisée en ce que l'élément de base (19) est fixé par l'intermédiaire d'un dispositif d'amortissement d'oscillations (20) à éléments d'amortissement sur un bâti de machine (3).

6. Installation de transport linéaire pour pièces détachées selon une ou plusieurs des revendications 1 à 5, caractérisée en ce qu'en direction de transport, la voie de guidage (38, 39) en hauteur des pièces détachées (2) est disposée à des inclinaisons différentes par rapport à l'élément de base (19).

7. Installation de transport linéaire pour pièces détachées selon une ou plusieurs des revendications 1 à 6, caractérisée en ce que le bâti de machine (3) est formé par un profilé orienté verticalement et à section transversale sensiblement en forme de C.

8. Installation de transport linéaire pour pièces détachées selon une ou plusieurs des revendications 1 à 7, caractérisée en ce que l'élément de base (19) est disposé sur le côté du bâti de machine (3) sur lequel les branches du profilé en forme de C font saillie au-dessus de la base du profilé.

9. Installation de transport linéaire pour pièces détachées selon une ou plusieurs des revendications 1 à 8, caractérisée en ce que le dispositif de transport (6) pour les quantités partielles de pièces détachées (2) ainsi qu'un récipient pour la réception de la quantité désordonnée de pièces détachées (2) sont disposés sur le côté de la base, à l'opposé du l'élément de base (19), du bâti de machine (3) formé par un profilé en forme de C.

10. Installation de transport linéaire pour pièces détachées selon une ou plusieurs des revendications 1 à 9, caractérisée en ce que le dispositif de transport (6) et le récipient pour la quantité désordonnée des pièces sont orientés parallèlement à la direction de transport des modules de fonction (56, 57, 58) et en particulier à l'opposé de la direction de transport à la suite du module de fonctions (56) pour la préorientation.

11. Installation de transport linéaire pour pièces détachées selon une ou plusieurs des revendications 1 à 10,

EP 0 439 015 B1

caractérisée en ce que des dispositifs de guidage et/ou de commande d'une porte de sûreté (53) sont disposés dans les branches dépassant en saillie au-dessus de la base du profilé en forme de C.

12. Installation de transport linéaire pour pièces détachées selon une ou plusieurs des revendications 1 à 11, caractérisée en ce que les modules de fonction (56, 57, 58) sont disposés entre la porte de sûreté (53) et la base du profilé en forme de C formant le bâti de machine (3).

13. Installation de transport linéaire pour pièces détachées selon une ou plusieurs des revendications 1 à 12, caractérisée en ce que le module de fonction (57) pour la mise en ordre et l'orientation des pièces détachées (2) est muni d'un réservoir de collecte (68) pour les pièces détachées (2) éliminées par l'intermédiaired'un trajet de transport de retour.

14. Installation de transport linéaire pour pièces détachées selon une ou plusieurs des revendi- cations 1 à 13, caractérisée en ce que le réservoir de collecte (68) est formé par un récipient interchangeable (33) pour la quantité désordonnée des pièces.

15. Installation de transport linéaire pour pièces détachées selon une ou plusieurs des revendications 1 à 14, caractérisée en ce que le dispositif de transport de retour est constitué par un transporteur vibratoire, qui présente une direction de transport différente de la direction de transport des modules de fonction (56, 57, 58).

16. Installation de transport linéaire pour pièces détachées selon une ou plusieurs des revendications 1 à 15, caractérisée en ce que dans la région du profilé en forme de C formant le bâti de machine (3) sont disposés des dispositifs d'alimentation, en particulier pour l'alimentation en air comprimé et/ou en énergie éléctrique en dessous et/ou au- dessus de l'élément de base (19)du transporteur linéaire.

17. Installation de transport linéaire pour pièces détachées selon une ou plusieurs des revendications 1 à 16, caractérisée en ce que des dispositifs pour la commande éléctrique et/ou pneumatique de l'installation de transport linéaire (13) sont disposés dans la région du profilé en forme de C au-dessus des modules de fonction (56, 57, 58).

18. Installation de transport linéaire pour pièces détachées selon une ou plusieurs des revendications 1 à 17, caractérisée en ce que les dispositifs de réglage et/ou d'ajustage (45) pour les modules de fonction (56, 57, 58) sont constitués par cylindres mis en charge par un fluide sous pression et/ou par des commandes actionnées éléctriquement.

19. Installation de transport linéaire pour pièces détachées selon une ou plusieurs des revendications 1 à 18, caractérisée en ce que les dispositifs de réglage et d'ajustage (45) pour les modules de fonction (56, 57, 58) sont formés par exemple par des commandes à tige filetée actionnées par des moteurs pas-à-pas.

20. Installation de transport linéaire pour pièces détachées selon une ou plusieurs des revendications 1 à 19, caractérisée en ce que les modules de fonction (56, 57, 58) sont formés par des voies de guidage en hauteur et latéral et il est prévu un dispositif de réglage relatif pour les voies de guidage en hauteur et latéral.

21. Installation de transport linéaire pour pièces détachées selon une ou plusieurs des revendications 1 à 20, caractérisée en ce qu'au dispositif de réglage latéral et/ou en hauteur et/ou relatif est associée une commande de positionnement et il est prévu des dispositifs de mesure et de signalisation de position.

22. Installation de transport linéaire pour pièces détachées selon une ou plusieurs des revendications 1 à 21, caractérisée en ce que les dispositifs de commande éléctriques sont constitués par un élément fonctionnel pour la commande (141) et un élément fonctionnel pour le système de diagnostic.

23. Installation de transport linéaire pour pièces détachées selon une ou plusieurs des revendications 1 à 22, caractérisée en ce que l'élément fonctionnel pour la commande (141) comprend une commande par exemple librement programmable.

24. Installation de transport linéaire pour pièces détachées selon une ou plusieurs des revendications 1 à 23, caractérisée en ce que l'élément fonctionnel pour le système de diagnostic comprend un élément indicateur,par exemple un écrtan et/ou un appareil d'enregistrement, par exemple une imprimante de bandes, une station de disquettes, etc.

17

**25.** Installation de transport linéaire pour pièces détachées selon une ou plusieurs des revendications 1 à 24, caractérisée en ce que le système de diagnostic dispose d'une logique de fréquence de défauts.

**26.** Installation de transport linéaire pour pièces détachées selon une ou plusieurs des revendications 1 à 25, caractérisée en ce que la logique de fréquence de défauts déclenche selon la nature et le nombre de défauts apparus,des fonctions d'enregistrement et/ou de commutation.

**27.** Installation de transport linéaire pour pièces détachées selon une ou plusieurs des revendications 1 à 26, caractérisée en ce que le système de diagnostic comprend un système de mesure pour les pièces détachées (2), en particulier la mesure sans contact.

# Fig.1

**Fig. 2**

Fig. 3

Fig. 4

Fig. 5

22

**Fig. 6**

**Fig. 7**

**Fig. 8**

# Fig. 9

Fig. 10

**Fig. 11**

EP 0 439 015 B1